Europäisches Patentamt

European Patent Office

Office européen des brevets

(11) Publication number: **0 430 598 A2**

# EUROPEAN PATENT APPLICATION

(21) Application number: **90312764.5**

(22) Date of filing: **23.11.90**

(51) Int. Cl.5: **C08L 23/06**, //(C08L23/06, 91:00)

(30) Priority: **24.11.89 JP 305900/89**

(43) Date of publication of application:
**05.06.91 Bulletin 91/23**

(84) Designated Contracting States:
**DE FR GB Bulletin**

(71) Applicant: **NIPPON PETROCHEMICALS COMPANY, LIMITED**
**3-1, Uchisaiwaicho 1-chome Chiyoda-ku Tokyo(JP)**

(72) Inventor: **Tokutake, Atsuo**
**2-23-16, Maruyamadai, Kounan-ku**
**Yokohama-shi, Kanagawa-ken(JP)**
Inventor: **Yoshikawa, Toshitsune**
**438, Miyauchi, Nakahara-ku**
**Kawasaki-shi, Kanagawa-ken(JP)**
Inventor: **Kojima, Shinji**
**3-20-17, Shinoharahigashi, Kouhoku-ku**
**Yokohama-shi, Kanagawa-ken(JP)**
Inventor: **Kubo, Junichi**
**1-1-8, Tanaka, Isogo-ku**
**Yokohama-shi, Kanagawa-ken(JP)**

(74) Representative: **Kirby, Harold Douglas Benson et al**
**G.F. Redfern & Company Marlborough Lodge 14 Farncombe Road**
**Worthing West Sussex BN11 2BT(GB)**

(54) **Resin compositions.**

(57) Resin compositions are made up essentially of a selected class of random copolymers and a selected class of hydrogen donors. The random copolymer results from an ethylene monomer and a styrene-based monomer, whereas the hydrogen donor is chosen from one or more hyrogenated oils of a petroleum or coal origin fractionated to boil in a specified range of temperatures. Radiation resistance is greatly enhanced. Also incorporated in the composition is a selected class of flame retardants to improve resistance to flammability.

EP 0 430 598 A2

## RESIN COMPOSITIONS

This invention relates to resin compositions which are highly resistant to both radiation and flammability. The compositions are suitable for use particularly in radiative environment such as at nuclear power plants and breeder reactors.

Highly radiation-resistant materials are literally required for use as coverings for electric wires and cables in highly radiative zones such as at a nuclear fuel storage vessel or a spent fuel reprocessing plant. Polyethylene finds extensive application, for its electrical, mechanical and economical advantages, as insulators for electric wires and cables, coverings, work clothes, sheets, pipes and the like as well as for electric wiring, machinery and equipment around nuclear furnaces. This polymer, however, has a drawback in that it becomes brittle or fragile upon exposure to an $\alpha$, $\beta$ or $\gamma$ radiation or a neutron.

In an effort to solve the above radiation problem, it has been proposed to use an alkylpyrene as a stabilizer against radiation as disclosed for instance in JP-A (Japanese Patent Laid-Open Publication) 50-106172. Such an additive is not satisfactory in its compatibility and dispersibility with other blends so that the resulting molded article would lack sufficient service life.

JP-A 59-89345 teaches blending polyethylene with polystyrene, or graft-polymerizing polyethylene with styrene which is supposed to be economically feasible. However, the polymer blend is not adequately compatible and hence susceptible to phase separation during molding. The graft polymer is not sufficiently resistant to radiation.

Polyimide, polyether sulfone and polyether ether ketone are known to be highly resistant to radiation. These polymers are rather costly, less easily extrudable and moreover flammable. Attempts have been made to attain flame resistance with use of halogen-based or inorganic-type flame retardants as disclosed in JP-A 51-132254, 56-136862 and 60-13832. Halogen retardants, though effective even in small amounts, are liable to develop poisonous gases on combustion. Inorganic retardants will make the resultant mix mechanically weak as they need to be added in large proportions.

To improve resistance to both radiation and flammability, JP-A 60-13829 discloses the addition of a certain flame retardant to a thermoplastic olefinic elastomer, and JP-A 62-192435 teaches incorporating two types of halogen and inorganic retardants into polyethylene. Both of these compositions are not so effective as to warrant commercial acceptance.

Sufficient resistance to radiation and to flammability is made difficult to achieve with the foregoing resin compositions of the prior art without a reduction in their inherent electrical, mechanical and economical qualities, those compositions having been employed for use as insulators for electric wires and cables, coverings, working clothes, sheets, pipes and the like in radiation environments.

The present inventors have previously found that the foregoing physical characteristics among other qualities can be attained by the use of a unique random copolymer of ethylene with a styrene-based monomer. This resin composition is disclosed in JP-A 1-113447. With respect to radiation resistance and flame retardance, it has now been found that significant improvements can be further made by the combination of such random copolymer with a specific hydrogen donor.

The present invention seeks to provide a new resin composition which is less costly and highly resistant to radiation. The invention also seeks to provide a resin composition which excels in both radiation resistance and flame retardance.

Many other features of the invention will be apparent from the following description.

More specifically, one aspect of the invention provides a resin composition having improved resistance to radiation which comprises: (A) a random copolymer comprising at least two monomers including an ethylene monomer and a styrene-based monomer, the random copolymer containing the styrene-based monomer in an amount of from 3 to 40% in terms of monomeric weight, and (B) a hydrogen donor in an amount of from 0.1 to 40 parts by weight per 100 parts by weight of the random copolymer, the hydrogen donor being at least one of the following components: (I) an oil derived by hydrogenating a coal tar or a fractionate thereof, (II) an oil resulting from hydrogenation of an oil fraction available by thermally or catalytically cracking or catalytically reforming petroleum oil and boiling at above 200°C, (III) an oil obtained from a hydrogenated pitch and boiling at from 160 to 550°C, the hydrogenated pitch being obtainable by primarily heat-treating and hydrogenating a heavy oil of a petroleum or coal origin and (IV) an oil resulting from secondarily heat-treating the hydrogenated pitch and boiling at from 160 to 550°C.

Another aspect of the invention provides a resin composition having improved resistance to radiation and to flammability, which comprises: (A) a random copolymer comprising at least two monomers including an ethylene monomer and a styrene-based monomer, the random copolymer containing the styrene-based monomer in an amount of from 3 to 40% in terms of monomeric weight, (B) a hydrogen donor in an amount of from 0.1 to 40 parts by weight per 100 parts by weight of the random copolymer, the hydrogen donor being at least one of the following components: (I) an oil derived by hydrogenating a coal tar or a fractionate thereof, (II) an oil resulting from hydrogenation of an oil fraction available by thermally or catalytically cracking or catallytically reforming petroleum oil and boiling at above 200°C, (III) an oil generating from a hydrogenated pitch and boiling at from 160 to 550°C, the hydrogenated pitch being obtainable by primarily heat-treating and hydrogenating a heavy oil of a petroleum or coal origin and (IV) an oil resulting from secondarily heat-treating the hydrogenated pitch and bnoiling at from 160 to 550°C, and (C) a flame retardant in an amount of from 5 to 200 parts by weight per 100 parts by weight of the random copolymer.

According to a first embodiment of the present invention, there are provided resin compositions made up essentially of a random copolymer (A) and a hydrogen donor (B) selected from one or more of components (I) to (IV).

Random copolymers (A) eligible for purposes of the invention are those copolymerizates of ethylene with a styrene-based monomer and, if necessary, further with an ethylenically unsaturated monomer.

Suitable styrene-based monomers include styrene, nucleus-substituted styrenes such as methyl styrene, dimethyl styrene, ethyl styrene, methoxy styrene, ethoxy styrene, vinyl benzoate, vinyl methyl benzoate, vinyl benzyl acetate and hydroxyl styrene, α-substituted styrenes such as α-methyl styrene, α-ethyl styrene and α-chloro styrene, and styrene derivatives. The content of the styrene-based monomer in the random copolymer should range from 3 to 40% by weight, preferably from 5 to 30% by weight, in terms of monomeric weight.

Ethylenically unsaturated monomers used herein may be selected from α-olefins such as propylene, butene-1, pentene-1, hexene-1, 4-methylpentene-1, octene-1, decene-1 and the like, vinyl esters such as vinyl fumarate, vinyl propionate, vinyl acetate and the like, and methacrylic acids and their esters such as methacrylic acid, acrylic acid, ethyl methacrylate, ethyl acrylate and the like, and mixtures thereof. This type of monomer should be in a content up to 20% by weight, preferably smaller than 15% by weight.

The random copolymer according to the invention may be blended at will with an ethylene type polymer. Typical examples include high-, medium- and low-density polyethylenes, copolymers of ethylene with an α-olefin of 3 to 12 carbon atoms such as propylene, butene-1, pentene-1, hexene-1, 4-methylpentene-1, octene-1, decene-1 or the like, ethylene-propylene rubbers, copolymers of ethylene with a polar group-containing monomer such as vinyl acetate, ethyl acrylate, methacrylic acid, ethyl methacrylate, maleic acid, maleic anhydride or the like, polymers resulting from reforming an ethylene polymer or an ethylene-α-olefin copolymer with an unsaturated carboxylic acid or its derivative such as acrylic acid, maleic acid or the like, and combinations thereof. Particularly preferred amongst those polymers are polyethylene of a ultralow density of 0.85 to 0.91 g/cm$^3$, high-pressure polyethylene of a density of 0.92 to 0.94 g/cm$^3$, linear low-density polyethylene, ethylene-propylene rubber and ethylene-propylene-diene rubber. Even in the case of use of such polymer blend, the styrene-based monomer content should not depart from the above specified range of 3 to 40% by weight.

The styrene-based monomer content if below 3% would be ineffective to improve radiation resistance. Above 40% would show a sharp decline in heat resistance.

The random copolymer used herein may be produced for example by radical or ionic polymerizations with a suitable set of reaction conditions. A better choice resides in a radical polymerization using high pressures because it does not involve residual catalyst which would lead to a polymer of poor electrical properties. Reaction may be performed in an autoclave or in a tubular reactor in the presence of a radical initiator and with the addition of a chain transfer agent and of reaction aids where desired. Reaction pressures range from 500 to 4,000 kg/cm$^2$, preferably from 1,000 to 3,500 kg/cm$^2$ and reaction temperatures from 50 to 400°C, preferably from 100 to 350°C. Two or more given monomers may be catalyzed concurrently or stepwise.

In that reaction radical initiators are selected from organic peroxides, azo compounds, amine oxides, oxygen and the like commonly accepted in the art. Examples of chain transfer agents include hydrogen, propylene, butene-1, saturated aliphatic hydrocarbons and halogen-substituted hydrocarbons of 1 to 20 or more carbon atoms such as methane, ethane, propane, butane, isobutane, n-hexane, cycloparaffin, chloroform and carbon tetrachloride, saturated aliphatic alcohols of 1 to 20 or greater carbon atoms such as methanol, ethanol, propanol and isopropanol, saturated aliphatic carbonyl compounds of 1 to 20 or greater carbon atoms such as carbon dioxide, acetone and methyl ethyl ketone, and aromatic compounds such as toluene, diethyl benzene and xylene.

Hydrogen donors (B) according to the invention are oily materials hydrogenated, i.e. components (I) to (IV).

Component (I) is an oil derivable by hydrogenating a coal tar or a fractionate thereof. Specific examples of tars and fractionates include treated oil, anthracene oil, phenathrene oil, tar oil, tar light oil, carvole oil, naphthalene oil, pitch oil, creosote oil and coal liquefied oil either alone or in combination.

Component (II) is an oil obtained by hydrogenating an oil fraction available from thermal or catalytic cracking or catalytic reforming of petroleum oil and fractioned to boil at above $200°C$. Oil fractions to be hydrogenated may suitably be chosen from either one or more of residual oil byproduced upon thermal cracking of naphtha, cycle oil, slurry oil and decanted oil (DCO) generated from catalytic cracking or FCC apparatus, residual oil derived by catalytically reforming naphtha, and tar induced by thermally cracking crude oil.

The procedure for hydrogenating the base oils for use in components (I) and (II) is optional, but may be performed usually in the presence of a catalyst having a hydrogenating function and with the use of hydrogen gas. This catalyst may be any known catalyst widely employed to hydrogenate petroleum fractions, and specific examples include a catalyst obtained by depositing a sulfide or oxide of at least one metal selected from Groups V to VIII metals, preferably from nickel, cobalt, molybdenum, vanadium and tungsten, on an inorganic carrier such as of alumina, silica, silica-alumina, cation-exchanged zeolite or the like, or a catalyst of a type having an aromatic nucleus-hydrogenating capability and resulting from supporting a metal such as nickel, nickel oxide, nickel-copper, platinum, platinum oxide, platinum-rhodium, platinum-lithium, rhodium, vanadium, cobalt, Raney cobalt, ruthenium or the like on an inorganic carrier such as of active carbon, alumina, silica-alumina, diatomaceous earth, zeolite or the like.

Hydrogenation conditions may be set at from 300 to $400°C$ and at from 30 to 150 atm in the case of a petroleum fraction-hydrogenating catalyst and at from 150 to $300°C$ and at from 30 to 150 atm in the case of an aromatic nucleus-hydrogenating catalyst. The reactor for this reaction may be of an ordinary fixed bed type.

To eliminate the tendency of the resin composition getting radiatively deteriorated, the hydrogen donor should importantly have a role to discharge sufficient hydrogen to capture free radicals which may emanate from the resin on exposure to radiation. The donor should also act to absorb radiation energy and remove it out of the system as light or heat energy, rendering the composition less dosable of radiative energy.

The base oils useful in components (I) and (II) are all abundant in a compound of two or more aromatic rings, a compound of one aromatic ring and one unsaturated 5-membered ring, or their mixture. Hydrogenation of such base oils, therefore, provides a hydrogen-donative material which can discharge hydrogen during radiation and retain, without localization, radiative energy having been absorbed by the aromatic ring or rings of any of the above compounds, eventually liberating that energy as light or heat energy.

The hydrogen donor contemplated under the invention is a material having a hydrogen transfer to hydrogen acceptor of not less than 0.1 to $350°C$ as determined by the number of hydrogen atoms captured by a hydrogen acceptor such as anthracene (hydrogen atom/mol anthracene). A hydrogen donor sample is reacted with anthracene under a set of conditions to thereby measure, as by gas chromatography, the amount of the hydrogen acceptor hydrogenated. More specifically, both the donor and the acceptor are subjected to reaction in a weight ratio of 1 to 2 and in a receptor equipped with a stirrer under the conditions given below.

| temperature | $350°C$ |
|---|---|
| pressure | 50 kg/cm$^2$ at N$_2$ pressure |
| time | 30 min |
| catalyst | absent |
| reactor | autoclave, 1-liter capacity, electromagnetic stirring |
| donor/acceptor | 1/2 by weight ratio |

Upon completion of the reaction, 9,10-dihydroanthracene, 1,4,5,8-tetrahydroanthracene, 1,4,5,8,9,10-hexahydroanthracene, 1,2,3,4,5,6,7,8-octahydroanthracene and residual anthracene are quantitatively analyzed by gas chromatography. This is based on the procedure of T. Yokono et al., Fuel, 60, 607 (1981).

Heavy oils of a petroleum origin for use in component (III) include heavy oil boiling at above $200°C$ obtained by steam catalytic cracking of petroleum oils, light cycle oil (LCO) and heavy cycle oil (HCO). Such heavy oil boiling at above $200°C$ is available from fractionates boiling at 200 to $550°C$ byproduced in the manufacture of ethylene, propylene and other olefins by steam cracking of naphtha, kerosene or light oil usually at from 700 to $1,200°C$. Another heavy oil (DCO) boiling at above $200°C$ finds its source from fractionates boiling at 200 to $550°C$ byproduced in the manufacture of gasoline and other light oils by catalytic cracking of kerosene, light oil or topped crude in the presence of a naturally occurring or synthetic silica-alumina catalyst or a zeolite catalyst at from 450 to $550°C$ and at from atmospheric to 20 kg/cm$^2$G.

Heavy oils of a coal origin also for use in component (III) include coal tar and its distillates such as creosote oil boiling at above 200° C.

The above heavy oils according to the invention are subjected to a primary heat treatment at from 350 to 480° C, preferably from 380 to 450° C, and at from 2 to 50 kg/cm², preferably from 5 to 40 kg/cm², for from 15 minutes to 20 hours. The resulting pitch softens usually at about 40 to 150° C. In that instance, if necessary, light oil fractions may be removed for example by distillation. The pitch is then hydrogenated in the presence of a suitable hydrogenation catalyst such as a catalyst composed of a catalyst component chosen from a Group IB metal such as copper, a Group VIB metal such as chrominum or molybdenum, or a Group VIII metal such as cobalt, nickel, palladium or platinum in the form of a sulfide or oxide, and an inorganic carrier such as bauxite, active carbon, diatomaceous earth, zeolite, silica, titania, zirconia, alumina or silica gel. Hydrogenation conditions, though varied with the type of catalyst used, are set usually at a temperature of 120 to 450° C, preferably 200 to 380° C and at a pressure of 20 to 180 kg/cm²G, preferably 40 to 150 kg/cm²G, for a time length of 0.5 to 3 hours by batch operation, or at an LHSV of 0.1 to 3.0, preferably 0.2 to 1.5, by continuous operation.

The aromatic nuclei of the aromatic hydrocarbons in the heavy oil fraction are partially hydrogenated during reaction at a rate of 10 to 85%, preferably 20 to 70%. This hydrogenation rate is defined by the following equation in which the carbon number of aromatic rings is determined by ASTM D-2140-66.

$$R = \frac{A - B}{A}$$

R : rate of hydrogenation
A : carbon number of aromatic ring prior to hydrogenation
B : carbon number of aromatic ring after hydrogenation

The resulting hydrogenated pitch usually has a softening point of 10 to 80° C and can be used per se as component (III), or may preferably be further distilled to yield fractions boiling at 160 to 550° C, preferably 200 to 550° C, for use as component (III).

The pitch thus hydrogenated may be further subjected to a secondary heat treatment to give fractions boiling at 160 to 550° C, preferably 200 to 550° C, for use as component (IV). The secondary heat treatment is effected by passing the hydrogenated pitch through gaseous or vapours nitrogen, argon, helium, xenon or the like inert to the pitch in a vacuum of about 0.1 to 500 mmHg and at a temperature of 340 to 450° C, preferably 370 to 420° C. Treatment time lengths depend upon the temperature and rate of pitch passing through inert gas or vapor and upon other parameters, but range usually from 30 minutes to 50 hours, preferably from 1 to 40 hours. The flow rate of inert gas or vapor may be chosen according to the type of reactor employed.

The fractions to be used as component (IV) are obtained from top distillates of the reactor during the secondary heat treatment or by further distillation of the heat-treated fractions. The pitch made available from such secondary treatment can be used as a starting material for carbon fibers and the like.

In preventing the resin composition against radiative deterioration, the hydrogen donor should act to generate sufficient hydrogen to capture free radicals mainly developing from the resin on radiation exposure and further absorb radiative energy and dispose it out of the system as energy of light or heat, thus leading to lesser dosage of radiative energy. To this end the base oils for use in components (I) to (IV) contain a major proportion of a compound having two or more aromatic rings, a compound having one aromatic ring and one unsaturated 5-membered ring, or their mixture. Such base oils when hydrogenated are converted to a material of high hydrogen donation. This hydrogenated material can discharge hydrogen during radiation and scatter radiative energy coming from absorption by the aromatic ring of the above constituent compound, liberating that energy as energy of light or heat.

The hydrogen donor (B) should be added in an amount of 0.1 to 40 parts by weight, preferably 0.5 to 30 parts by weight based on 100 parts by weight of the random copolymer (A). Amounts if smaller than 0.1 part would bear no significant results and if larger than 40 parts would produce no greater effect but rather render the hydrogen donor incompatible wih the random copolymer and the resultant mix difficult to knead and eventually cause bleeding.

It has been further found advantageous to incorporate an antioxidant selected from oxidation inhibitors such as hindered phenol-based, phosphorus-based, thioether-based and amine-based compounds. The antioxidant in combination with the hydrogen donor is synergistically effective in improving proofness to radiation even with the addition of that donor in so small an amount as to be free from objectionable bleeding.

5

Suitable phenol-based antioxidants include for example triethyleneglycol-bis[3-(3-t-butyl-5-methyl-4-hydroxyphenyl)propionate], n-octadecyl-3-(3',5'-di-t-butyl-4'-hydroxyphenyl)propionate, tetrakis[methylene-3-(3',5'-di-t-butyl-4'-hydroxyphenyl)propionate]methane, 1,3,5-trimethyl-2,4,6-tris-(3,5-di-t-butyl-4-hydroxybenzyl)benzene, tris(3,5-di-t-butyl-4-hydroxybenzyl)isocyanurate, N,N'-hexamethylene-bis(3,5-di-t-butyl-4-hydroxyhydrocyanamide) and the like.

Amine-based antioxidants include for example octyldiphenylamine, 2,4-bis(n-octylthio)-6-(4-hydroxy-3,5-di-t-butylanilino)-1,3,5-triazine, phenyl-1- naphthylamine, poly(2,2,4-trimethyl-1,2-dihydroquinoline), N,N'-diphenyl-p-phenylenediamine and the like.

Thioether-based antioxidants include for example dilaurylthiodipropionate, distearylthiopropionate, pentaerythritol-tetrakis(β-laurylthipropionate) and the like.

Phosphorus-based antioxidants include for example tris(2,4-di-t-butylphenyl)phosphite, tetrakis(2,4-di-t-butylphenyl)-4,4'-biphenylene phosphonite, di(2,4-di-t-butylphenyl)pentaerythritol diphosphite, trisnonylphenyl phosphite, diphenylisooctyl phosphite, tetratridecyl4,4'-butylidene-bis(3-methyl-6-t-butylphenyl)-diphosphite and the like.

The antioxidant should range in amount from 0.01 to 20 parts by weight, preferably from 0.05 to 10 parts by weight, per 100 parts by weight of the random copolymer. Less than 0.01 part would not be sufficient to provide a synergistic effect with the hydrogen donor, and more than 20 parts would only be costly feasible. Two or more antioxidants may be combined where desired.

A second embodiment according to the invention contemplates providing a resin composition which comprises a random copolymer (A), a hydrogen donor (B) and a flame retardant (C).

Halogen-based retardants used herein may be selected from bromine-based compounds such as tetrabromo bisphenol A (TBA), hexabromo benzene, decabromo diphenyl ether, tetrabromo ethane (TBE), tetrabromo butane (TBB), hexabromo cyclodecane (HBCD) and the like, chlorine-based compounds such as chlorine type paraffin, chlorinated polyphenyl, chlorinated polyethylene, chlorinated diphenyl, perchloro pentacyclodecane, chlorinated naphthalene and the like, halogen type compounds such as diphenylsulfide halide and the like, halogenated polystyrenes and their derivatives such as brominated polystyrene, brominated poly-α-methyl styrene and the like, halogenated polycarbonates such as brominated polycarbonate and the like, halogenated polyesters such as polyalkylene tetrabromo terephthalate, terephthalate brominated type polyester and the like, halogenated epoxy compounds such as bisphenol halide type epoxy resin and the like, halogenated polyphenylene oxides such as polydibromo phenylene oxide and the like, and polymeric halogen-containing polymers such as cyanurates of bisphenol halides and the like. These halogen retardants may preferably be combined with a flame-retarding aid such as antimony trioxide.

Phosphorus-based retardants include phosphates and phosphate halides such as tricresyl phosphate, tri(β-chloroethyl)phosphate, tri(dibromopropyl)phosphate, 2,3-dibromopropyl-2,3-chloropropyl phosphate and the like.

Inorganic-type retardants include hydrates of inorganic metal compounds such as of aluminum hydroxide, magnesium hydroxide, dolomite, hydrotalcite, calcium hydroxide, barium hydroxide, basic magnesium carbonate, zirconium hydroxide, tin oxide and the like, zinc borate, zinc methaborate, barium methaborate, zinc carbonate, magnesium carbonate-calcium, calcium carbonate, barium carbonate, magnesium oxide, molybdenum oxide, zirconium oxide, tin oxide, antimony oxide, red phosphorus and the like and mixtures thereof.

Two or more of the retardants listed above may be used in the second-embodied composition. Inorganic-type, halogen-free retardants are particularly preferred, from standpoints of environmental protection, among which are most typified by magnesium hydroxide, aluminum hydroxide, basic magnesium carbonate and hydrotalcite either alone or in combination. Such compounds are highly flame-retardant and cost-saving.

The flame retardants according to the invention are particulate in nature. The average particle sizes, though dependent upon the type of retardants, are conveniently smaller than 20 μm for magnesium hydroxide and aluminum hydroxide.

The flame retardant (C) should be added in an amount of 5 to 200 parts by weight, preferably 7 to 150 parts by weight, per 100 parts by weight of the random copolymer (A). To be more specific, the amount is in the range of 5 to 20 parts for organic type retardants and in the range of 40 to 200 parts for inorganic type retardants. Below 5 parts would not be effective to retard flammability, whereas above 200 parts would make the final mix mechanically poor, less stretchable and flexible, rather brittle and hence deteriorative at low temperature.

To implement the first and second embodiments of resin compositions according to the invention, various other additives may be employed which are chosen from photo stabilizers such as benzotriazoles, benzophenones, salicylates, nickel complex salts and hindered amines, heavy metal inactivators, metallic soaps, nucleating agents, plasticizers, organic tin compounds, antistatic agents, lubricants, antiblocking agents, organic or inorganic fillers, foaming agents, crosslinking agents, rubbers and the like.

The resin compositions of the invention meet the following physical and economical benefits.

1. High radiation resistance due to the specific combination of a radiation-proof ethylene-styrene copolymer with an aromatic multicyclic hydrogen donor capable of discharging hydrogen upon radiation and converting radiative energy into other types of energy.

2. Good cost saving accruing from using as the hydrogen donor a hydrogenated oil having its source of supply from coal tar or fractionates thereof, oil fractions boiling at above 200°C derived by thermal or catalytic cracking or catalytic reforming of petroleum oil, or oil fractions obtained by heat treatment of heavy oils of a petroleum or coal origin.

3. Easy preparation of the ethylene-styrene copolymer owing to the styrene content being made smaller as the copolymer is used in combination with the hydrogenated oil.

4. Synergistic improvement in resistance to radiative deterioration by the addition of a specific antioxidant.

5. Great flame retardance attributable to the use of a specific flame retardant as the copolymer is highly receptive of the retardant in relatively large proportions.

6. Freedom from environmental pollution due to the flame retardant being chosen particularly from inorganic metal compounds such as aluminum hydroxide, magnesium hydroxide and the like which are generally immune from poisonous gas even on combustion and less smoky.

7. Possible application, under adverse radiative conditions, as electrical materials for insulation and covering of electric wires and cables.

The invention will be further described by way of the following examples which are however given as illustrative rather than restrictive.

The addition of hydrogenated oil, the exposure to radiation and the determination of radiation resistance were conducted under the conditions indicated below.

Selected ethylene-styrene copolymers of varied styrene contents were kneaded with a selected hydrogenated oil in amounts of 5, 15 and 25% by weight on a 30 mmⵁ biaxial extruder held at a given temperature.

Each of the test samples was sheeted to a thickness of 2 mm. The resulting sheet was exposed to a $\gamma$ radiation emitted from Co 60 at room temperature, at a dose rate of 0.9 Mrad/hr in the air and in a total dosage of 100 Mrad.

Radiation resistance was adjudged by measuring tensile strength and tensile elongation prior to and after radiation.

Experiment 1

Antracene and creosote oils as the examples of coal tar and its fractionates were subjected to hydrogenation under the conditions shown in Table 1.

Table 1

| reaction temperature | : 370°C |
| reaction pressure | : 75 kg/cm$^2$ (at N$_2$ pressure) |
| LHSV | : 1.0 |
| catalyst | : Co-Mo-Al$_2$O$_3$ (desulfurized catalyst commercially avaiable) |
| reactor | : fixed bed with downward flow |

The oils thus hydrogenated were examined for their hydrogen donating capabilities in the manner hereinabove described. Their respective amounts of hydrogen transfer to anthracene were 0.85 and 0.97 (hydrogen atom/mol anthracene). To facilitate comparison, kerosene as an oil with no ability to donate hydrogen was also determined for hydrogen transfer to anthracene to be 0.027.

Experiment 2

Catalytically reformed residual oil and thermally cracked naphtha residual oil, both examples of petroleum oil fractions, were hydrogenated as shown in Table 1 and checked for hydrogen transfer to

7

anthracene to be 0.67 and 0.71, respectively.

Experiment 3

Decanted oil (DCO) boiling at above 200°C was collected, by catalytic cracking at 500°C in the presence of a silica-alumina catalyst, from vacuum gas oil (VGO) derived from Arabian crude oil and thereafter hydrogenated. Primary heat treatment was effected at 15 kg/cm2G and at 400°C for 3 hours, followed by removal of light oils via distillation at 250°C and at 1.0 mmHg, whereupon there was provided a pitch softening at 83°C. The resulting pitch was partially nucleus-hydrogenated on contact with hydrogen at 135 kg/cm2G, at 350°C and at 0.25 LHSV to thereby give a hydrogenated pitch.

The pitch thus hydrogenated was distilled at 250°C and at 1.0 mmHg, thereby yielding a distillate boiling at 160 to 550°C as a hydrogen donor according to the invention.

Experiment 4

The hydrogenated pitch obtained in Experiment 3 was subjected to secondary heat treatment with stirring in a nitrogen stream at 380°C for 20 hours. A distillate boiling at 200 to 550°C was taken a hydrogen donor according to the invention.

Inventive Examples 1 to 7 and Comparative Examples 1 to 4

Into a metallic autoclave equipped with a stirrer, after being replaced with nitrogen and ethylene, were predetermined amounts of ethylene and styrene monomers, n-heptane as a chain transfer agent and di-t-butyl peroxide as an initiator. Polymerization was performed at 1,900 kg/cm2 and at 180°C for 40 minutes to thereby give three different random copolymers of ethylene and styrene (Et-St copolymers) having styrene contents of 5, 13 and 30% by weight, respectively. The copolymerizates were purified and dried in vacuo.

The resulting random copolymers were formulated, as shown in Table 2, with the anthracene oil hydrogenated in Experiment 1. As controls were used low-density polyethylene (LDPE)(Nisseki Rexlon W3000, MFR 1.0 g/10 min, density 0.920 g/cm$^3$) and ultralow-density polyethylene (ULDPE)(Nisseki Softrex D9052, MFR 1.0 g/10 min, density 0.905 g/cm$^3$). Exposure to a $\gamma$ radiation was done in a total dosage of 100 Mrad with the results shown also in Table 2.

LDPE, Comparative Example 1, revealed a sharp decline in tensile elongation after radiation, this quality meaning a measure of brittleness. Et-St copolymers according to the invention have been found wholly satisfactory with after-radiation elongation retained even at above 50% of initial elongation.

Inventive Examples 8 to 11 and Comparative Example 5

The procedure of Examples 1 to 7 was followed in preparing a random copolymer of ethylene and styrene with a styrene content of 3% by weight. Test formulations were prepared as shown in Table 3 with use of hydrogenated oil obtained by thermal cracking of naphtha in Experiment 2 and also of different antioxidants (AO). Radiation exposure was carried out in a total dosage of 100 Mrad with the results shown in Table 3.

Comparative Example 5 devoid of hydrogenated oil and antioxidant was unacceptable in radiation resistance. Both additives have been proved to greatly contribute to preventing radiative deterioration as evidenced by Inventive Examples 8 to 11.

Inventive Examples 12 to 14 and Comparative Example 6

Three Et-St copolymers as were used in Inventive Examples 1 to 7 were formulated with the hydrogen donor of Experiment 3 and further with organic-type flame retardants and a flame-retarding aid as shown in Table 4. Radiation exposure was done in a total dosage of 100 Mrad with the results also listed in Table 4.

Omission of the hydrogen donor according to the invention was unacceptable in after-radiation tensile properties as is evident from Comparative Example 6.

Inventive Examples 15 to 17 and Comparative Example 7

Three Et-St copolymers as were used in Inventive Examples 1 to 7 were formulated with the hydrogen donor of Experiment 4 and also with inorganic-type flame retardants and a flame-retarding aid as shown in Tbale 5. Radiation was likewith exposed with the results listed in Table 5.

The hydrogen donor according to the invention has proved to maintain sufficient tensile qualities even after radiation.

Table 2

| Receipes/Properties | Inventive Examples | | | | | | | Comparative Examples | | | |
|---|---|---|---|---|---|---|---|---|---|---|---|
| | 1 | 2 | 3 | 4 | 5 | 6 | 7 | 1 | 2 | 3 | 4 |
| LDPE | - | - | - | - | - | - | - | 100 | - | - | - |
| Et-St copolymer (St: 5%) | 100 | 100 | 100 | - | - | - | - | - | 100 | - | - |
| Et-St copolymer (St: 13%) | - | - | - | 100 | 100 | 100 | 70 | - | - | 100 | - |
| Et-St copolymer (St: 30%) | - | - | - | - | - | - | - | - | - | - | 100 |
| ULDPE | - | - | - | - | - | - | 30 | - | - | - | - |
| hydrogenated anthracene oil | 5 | 15 | 25 | 5 | 15 | 25 | 5 | - | - | - | - |
| prior to radiation | | | | | | | | | | | |
| tensile strength (kg/cm$^2$) | 154 | 133 | 127 | 170 | 146 | 130 | 163 | 182 | 213 | 211 | 233 |
| tensile elongation (%) | 730 | 830 | 860 | 700 | 840 | 880 | 680 | 680 | 720 | 730 | 780 |
| after radiation (100 Mrad) | | | | | | | | | | | |
| tensile strength (kg/cm$^2$) | 176 | 165 | 170 | 190 | 230 | 163 | 187 | 114 | 148 | 205 | 216 |
| tensile elongation (%) | 420 | 540 | 620 | 400 | 550 | 700 | 400 | 50 | 200 | 310 | 340 |

Table 3

| Recipes/Properties | Inventive Examples | | | | Comparative Example |
|---|---|---|---|---|---|
| | 8 | 9 | 10 | 11 | 5 |
| Et-St copolymer (St: 3%) | 100 | 100 | 100 | 100 | 100 |
| hydrogenated residual oil from thermal cracking of naphtha | 5 | 5 | 5 | 5 | - |
| AO-1 | 5 | - | - | 5 | - |
| AO-2 | - | 5 | - | - | - |
| AO-3 | - | - | 5 | - | - |
| AO04 | - | - | - | 5 | - |
| prior to radiation | | | | | |
| tensile strength (kg/cm$^2$) | 142 | 136 | 138 | 142 | 200 |
| tensile elongation (%) | 700 | 680 | 690 | 710 | 690 |
| after radiation (100 Mrad) | | | | | |
| tensile strength (kg/cm$^2$) | 151 | 146 | 160 | 163 | 130 |
| tensile elongation (%) | 360 | 330 | 400 | 410 | 160 |

AO-1 : 4,4′thio-bis(3-methyl-6-t-butylphenol) Nocrac 300, Ohuchi Shinko Chemicals Co.

AO-2 : tris(2,4-di-t-butylphenyl)phosphite

AO-3 : bis (2,2,6,6-tetramethyl-4-piperidinyl)sebacate Sanol LS770, Sankyo Co.

AO-4 : dilauryl-3,3′-thiodipropionate DLTP, Yoshitomo Pharmaceuticals Co.

Table 4

| Recipes/Properties | Inventive Examples | | | Comparative Example |
|---|---|---|---|---|
| | 12 | 13 | 14 | 6 |
| Et-St copolymer (St: 3%) | - | - | - | 100 |
| Et-St copolymer (St: 13%) | 100 | - | 100 | - |
| Et-St copolymer (St: 30%) | - | 100 | - | - |
| petroleum pitch primarily heat-treated | 5 | 5 | 5 | - |
| chlorinated polyethylene | - | - | 20 | - |
| DBDE | 40 | 40 | 40 | 40 |
| antimony trioxide | 20 | 20 | 20 | 20 |
| prior to radiation | | | | |
| tensile strength (kg/cm$^2$) | 200 | 210 | 190 | 210 |
| tensile elongation (%) | 470 | 490 | 520 | 450 |
| after radiation (100 Mrad) | | | | |
| tensile strength (kg/cm$^2$) | 220 | 250 | 170 | 130 |
| tensile elongation (%) | 270 | 290 | 280 | 30 |
| index of oxygen | 25 | 27 | 28 | 25 |
| DBDE : decarbromodiphenyl ether | | | | |

Table 5

| Recipes/Properties | Inventive Examples | | | Comparative Example |
|---|---|---|---|---|
| | 15 | 16 | 17 | 7 |
| Et-St copolymer (St: 3%) | - | - | - | 100 |
| Et-St copolymer (St: 13%) | 100 | - | 100 | - |
| Et-St copolymer (St: 30%) | - | 100 | - | - |
| petroleum pitch secondarily heat-treated | 15 | 15 | 15 | - |
| DBDE | - | 30 | - | - |
| magnesium hydroxide | 100 | 50 | 150 | 100 |
| antimony trioxide | 20 | 20 | 20 | 20 |
| prior to radiation | | | | |
| tensile strength (kg/cm$^2$) | 120 | 130 | 100 | 90 |
| tensile elongation (%) | 530 | 570 | 500 | 270 |
| after radiation (100 Mrad) | | | | |
| tensile strength (kg/cm$^2$) | 160 | 170 | 120 | 60 |
| tensile elongation (%) | 320 | 340 | 300 | 70 |
| flame retardance | O | O | O | O |

## Claims

1. A resin composition having improved resistance to radiation which comprises:

(A) a random copolymer comprising at least two monomers including an ethylene monomer and a styrene-based monomer, said random copolymer containing said styrene-based monomer in an amount of from 3 to 40% in terms of monomeric weight; and

(B) a hydrogen donor in an amount of from 0.1 to 40 parts by weight per 100 parts by weight of said random copolymer, said hydrogen donor being at least one of the following components:

(I) an oil derived by hydrogenating a coal tar or a fractionate thereof;

(II) an oil resulting from hydrogenating of an oil fraction available by thermally or catalytically cracking or reforming petroleum oil and boiling at above 200°C;

(III) an oil generating from a hydrogenated pitch and boiling at from 160 to 550°C, said hydrogenated pitch being obtainable by primarily heat-treating and hydrogenating a heavy oil of a petroleum or coal origin; and

(IV) an oil resulting from secondarily heat-treating said pitch and boiling at from 160 to 550°C.

2. A resin composition having improved resistance to radiation and to flammability which comprises:

(A) a random copolymer comprising at least two monomers including an ethylene monomer and a styrene-based monomer, said random copolymer containing said styrene-based monomer in an amount of from 3 to 40% in terms of monomeric weight;

(B) a hydrogen donor in an amount of from 0.1 to 40 parts by weight per 100 parts by weight of said random copolymer, said hydrogen donor being at least one of the following components:

(I) an oil derived by hydrogenating a coal tar or a fractionate thereof;

(II) an oil resulting from hydrogenation of an oil fraction available by thermally or catalytically cracking or reforming petroleum oil and boiling at above 200°C;

(III) an oil generating from a hydrogenated pitch and boiling at from 160 to 550°C, said hydrogenated pitch being obtainable by primarily heat-treating and hydrogenating a heavy oil of a petroleum or coal origin; and

(IV) an oil resulting from secondarily heat-treating said pitch and boiling at from 160 to 550°C; and

(C) a flame retardant in an amount of from 5 to 200 parts by weight per 100 parts by weight of said random copolymer.

3. The composition according claim 1 or 2 further including an antioxidant in an amount of from 0.01 to 20 parts by weight per 100 parts by weight of said random copolymer, said antioxidant being a hindered phenol-based, phosphor-based, thioether-based or amine-based compound either alone or in combination.

4. The combination according to claim 1 or 2 wherein said random copolymer is a copolymerizate derived by radical polymerization at a reaction temperature of from 50 to 400°C and at a reaction pressure of from 500 to 4,000 kg/cm².

5. The composition according to claim 1 or 2 wherein said random copolymer is a blend having an ethylene type polymer contained.

6. The composition according to claim 1 or 2 wherein said hydrogen donor as a hydrogen transfer to hydrogen acceptor of not less than 0.1 at 350°C as determined by the number of hydrogen atoms per mol of anthracene.

7. The composition according to claim 1 or 2 wherein said coal tar or fractionate for use in component (I) is treated oil, anthracene oil, phenanthrene oil, tar oil, carvole oil, naphthalene oil, pitch oil, creosote oil or coal liquefied oil or a combination thereof.

8. The composition according to claim 1 or 2 wherein said oil fraction for use in component (II) is residual oil byproduced upon thermal cracking of naphtha, cycle oil, slurry oil or decanted oil generated by catalytically cracking naphtha, residual oil derived by catalytically reforming naphtha or tar induced by thermally cracking crude oil or a combination thereof.

9. The composition according to claim 1 or 2 wherein said petroleum-origin heavy oil for use in components (III) and (IV) is heavy oil derived by thermal or catalytic cracking of petroleum oil and fractionated to boil at above 200°C, light cycle oil, heavy cycle oil or decanted oil.

10. The composition according to claim 1 or 2 wherein said coal-origin heavy oil for use in components (III) and (IV) is a coal tar or a distillate thereof boiling at above 200°C.